(19) Europäisches Patentamt
European Patent Office
Office européen des brevets

(11) **EP 2 296 380 A1**

(12) **EUROPEAN PATENT APPLICATION**

(43) Date of publication:
**16.03.2011 Bulletin 2011/11**

(51) Int Cl.:
***H04N 7/26*** *(2006.01)*          ***H04N 7/36*** *(2006.01)*
***H04N 7/50*** *(2006.01)*

(21) Application number: **09011331.7**

(22) Date of filing: **03.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Panasonic Corporation Kadoma-shi
Osaka 571-8501 (JP)**

(72) Inventors:
• **Wittmann, Steffen
63225 Langen (DE)**
• **Narroschke, Matthias
63225 Langen (DE)**

(74) Representative: **Grünecker, Kinkeldey,
Stockmair & Schwanhäusser
Anwaltssozietät
Leopoldstrasse 4
80802 München (DE)**

(54) **Efficient syntax for AIF signalling**

(57)    The present invention provides a method for encoding, a method for decoding, an apparatus for encoding and an apparatus for decoding a video signal. A filter mode is selected indicating a type of a filter for filtering said video signal. According to the selected filter mode, a number of filter parameters is determined. The filter mode indicator is encoded such that its encoded length depends on the amount of the filter parameters to be signaled for this filter mode. The encoded filter mode indicator together with the filter parameters are then included into the bitstream in which also the encoded video signal is comprised. The decoder extracts the filter mode indicator and decodes it. Based on the filter mode, the number of filter parameters is identified and the filter parameters are extracted from the bitstream. According to the filter mode and the filter parameters, a filter is set-up and applied to the video signal.

Fig. 9

## Description

The present invention relates to a method and an apparatus for video encoding and decoding using filters for filtering of video signals.

BACKGROUND OF THE INVENTION

At present, the majority of standardized video coding algorithms are based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, and MPEG-4). The most recent and advanced video coding standard is currently the standard denoted as H. 264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted submacroblocks or simply blocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

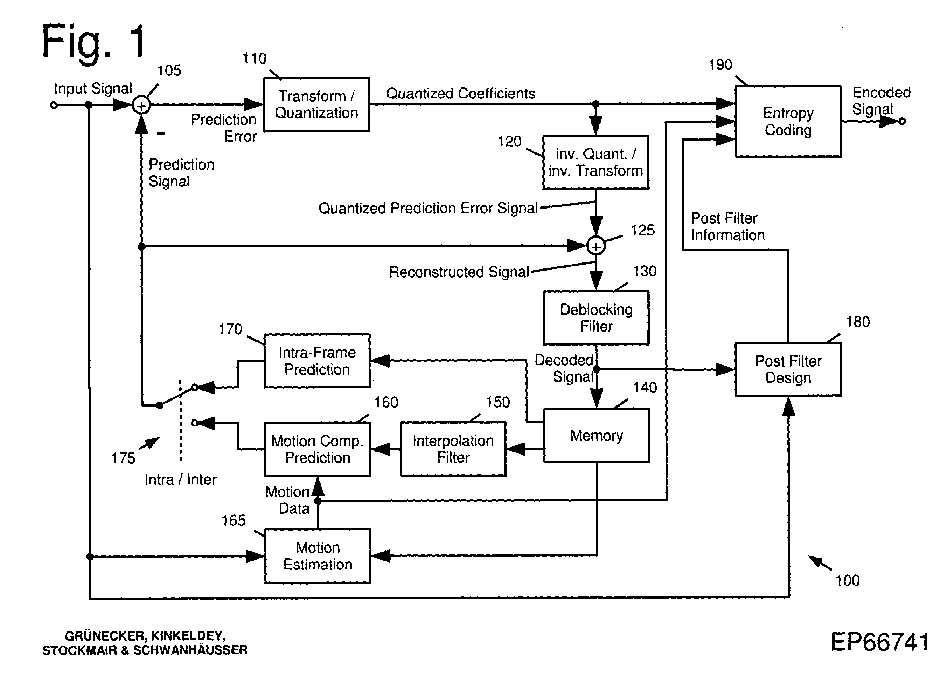

Figure 1 is an example of a typical H. 264/MPEG-4 AVC standard compliant video encoder 100. The H.264/MPEG-4 AVC standard combines all above-mentioned encoding steps. A subtractor 105 first determines differences between a current block to be encoded of an input video image (input signal) and a corresponding prediction block, which is used for the prediction of the current block to be encoded. In H. 264/MPEG-4 AVC, the prediction signal is obtained either by a temporal or by a spatial prediction. The type of prediction can be varied on a per frame basis or on a per macroblock basis. Macroblocks predicted using temporal prediction are called inter-encoded and macroblocks predicted using spatial prediction are called intra-encoded. The type of prediction for a video frame can be set by the user or selected by the video encoder so as to achieve a possibly high compression gain. In accordance with the selected type of prediction, an intra/inter switch 175 provides corresponding prediction signal to the subtractor 105. The prediction signal using temporal prediction is derived from the previously encoded images, which are stored in a memory 140. The prediction signal using spatial prediction is derived from the values of boundary pixels in the neighboring blocks, which have been previously encoded, decoded, and stored in the memory 140. The memory unit 140 thus operates as a delay unit that allows a comparison between current signal values to be encoded and the prediction signal values generated from previous signal values. The memory 140 can store a plurality of previously encoded video frames. The difference between the input signal and the prediction signal, denoted prediction error or residual, is transformed resulting in coefficients, which are quantized 110. Entropy encoder 190 is then applied to the quantized coefficients in order to further reduce the amount of data in a lossless way. This is mainly achieved by applying a code with code words of variable length wherein the length of a code word is chosen based on the probability of occurrence thereof.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images. Intra-fame prediction uses a predefined set of intra-prediction modes, which basically predict the current block using the boundary pixels of the neighboring blocks already encoded. The different modes of spatial intra-prediction refer to different directions of the applied two-dimensional prediction. This allows efficient spatial intra-prediction in the case of various edge directions. The prediction signal obtained by such an intra-prediction is then subtracted from the input signal by the subtractor 105 as described above. In addition, spatial intra-prediction mode information is entropy encoded and provided together with the encoded video signal.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal, which is known at both sides, the encoder and the decoder. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the quantized prediction error signal. The video signal after deblocking is the decoded signal, which is generally displayed at the decoder side (if no post filtering is applied). The deblocking filter of H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. The strength of the low pass filter is determined by the prediction signal and by the quantized prediction error signal. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency.

Intra-coded macroblocks are filtered before displaying, but intra prediction is carried out using the unfiltered reconstructed macroblocks.

In order to be decoded, inter-encoded images require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I-type macroblocks. An inter-encoded macroblock (P- or B- macroblock) is predicted by employing motion compensated prediction 160. First, a best-matching block is found for the current block within the previously encoded and decoded video frames by a motion estimator 165. The best-matching block then becomes a prediction signal and the relative displacement (motion) between the current block and its best match is then signalized as motion data in the form of three-dimensional motion vectors within the side information provided together with the encoded video data. The three dimensions consist of two spatial dimensions and one temporal dimension. In order to optimize the prediction accuracy, motion vectors may be determined with a spatial sub-pixel resolution e.g. half pixel or quarter pixel resolution. A motion vector with spatial sub-pixel resolution may point to a spatial position within an already decoded frame where no real pixel value is available, i.e. a sub-pixel position. Hence, spatial interpolation of such pixel values is needed in order to perform motion compensated prediction. This is achieved by interpolation filter 150. According to the H.264/MPEG-4 AVC standard, a six-tap Wiener interpolation filter with fixed filter coefficients and a bilinear filter are applied in order to obtain pixel values for sub-pixel positions in vertical and horizontal directions separately.

For both, the intra- and the inter-encoding modes, the differences between the current input signal and the prediction signal are transformed and quantized by the unit 110, resulting in the quantized coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality then high frequency components so that more bits can be spent for coding the low frequency components than the high frequency components. In the entropy coder, the two-dimensional matrix of quantized coefficients is converted into a one-dimensional array. Typically, this conversion is performed by a so-called zig-zag scanning, which starts with the DC-coefficient in the upper left corner of the two-dimensional array and scans the two-dimensional array in a predetermined sequence ending with an AC coefficient in the lower right corner. As the energy is typically concentrated in the left upper part of the two-dimensional matrix of coefficients, corresponding to the lower frequencies, the zig-zag scanning results in an array where usually the last values are zero. This allows for efficient encoding using run-length codes as a part of/before the actual entropy coding.

H.264/MPEG-4 AVC employs scalar quantization 110, which can be controlled by a quantization parameter (QP) and a customizable quantization matrix (QM). One of 52 quantizers is selected for each macroblock by the quantization parameter. In addition, quantization matrix is specifically designed to keep certain frequencies in the source to avoid losing image quality. Quantization matrix in H.264/MPEG-4 AVC can be adapted to the video sequence and signalized together with the video data.

The H.264/MPEG-4 AVC includes two functional layers, a Video Coding Layer (VCL) and a Network Abstraction Layer (NAL). The VCL provides the encoding functionality as briefly described above. The NAL encapsulates information elements into standardized units called NAL units according to their further application such as transmission over a channel or storing in storage. The information elements are, for instance, the encoded prediction error signal or other information necessary for the decoding of the video signal such as type of prediction, quantization parameter, motion vectors, etc. There are VCL NAL units containing the compressed video data and the related information, as well as non-VCL units encapsulating additional data such as parameter set relating to an entire video sequence, or a Supplemental Enhancement Information (SEI) providing additional information that can be used to improve the decoding performance.

In order to improve the image quality, a so-called post filter 280 may be applied at the decoder side 200. The H.264/MPEG-4 AVC standard allows the sending of post filter information for such a post filter via the SEI message. The post filter information is determined at the encoder side by means of a post filter design unit 180, which compares the locally decoded signal and original input signal. In general, the post filter information is an information allowing decoder to set up an appropriate filter. It may include directly the filter coefficients or another information enabling setting up the filter, such as cross-correlation information related to the uncompressed signal, such as cross-correlation information between the original input image and the decoded image or between the decoded image and the quantization noise. This cross-correlation information can be used to calculate the filter coefficients. The filter information, which is output by the post filter design unit 180 is also fed to the entropy coding unit 190 in order to be encoded and inserted into the encoded signal. At the decoder, the filter information may be used by a post filter, which is applied on the decoded signal before displaying.

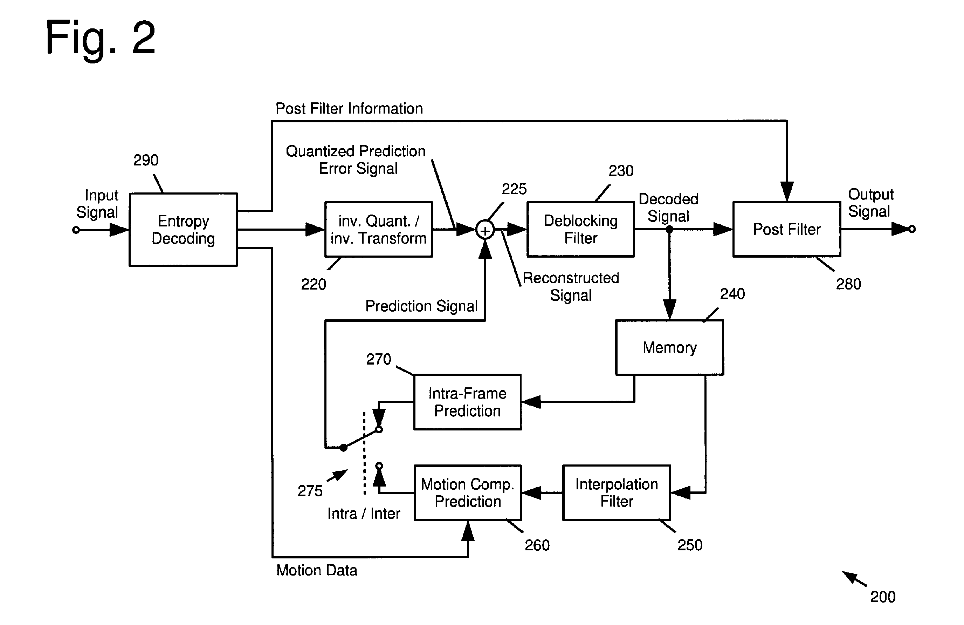

Figure 2 illustrates an example decoder 200 compliant with the H.264/MPEG-4 AVC video coding standard. The encoded video signal (input signal to the decoder) first passes to entropy decoder 290, which decodes the quantized coefficients, the information elements necessary for decoding such as motion data, mode of prediction etc., and the post filter information. The quantized coefficients are inversely scanned in order to obtain a two-dimensional matrix, which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder in the case no quantization noise is introduced.

The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250. The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks.

The post filter information is fed to a post filter 280, which sets up a post filter accordingly. The post filter is then applied to the decoded signal in order to further improve the image quality. Thus, the post filter is capable of adapting to the properties of the video signal entering the encoder.

In summary, there are three types of filters used in the latest standard H.264/MPEG-4 AVC: an interpolation filter, a deblocking filter and a post filter. In general, the suitability of a filter depends on the image to be filtered. Therefore, a filter design capable of adapting to the image characteristics is advantageous. The coefficients of such a filter may be designed as Wiener filter coefficients. The Wiener filter is designed to minimize the mean square error between an input signal, which is the desired signal, and the noisy signal after having applied the filter. The solution of a Wiener filter requires calculating the autocorrelation of the corrupted signal and the cross correlation between the input signal and the corrupted signal. In video coding, quantization noise is superposed to the original (input) video signal in the quantization step. Wiener filtering in the context of video coding aims at the reduction of the superposed quantization noise in order to minimize the mean squared reconstruction error. Further details on adaptive filter design can be found for example in S. Haykin, "Adaptive Filter Theory", Fourth Edition, Prentice Hall Information and System Sciences Series, Prentice Hall, 2002.

The filter data information elements embedded within the bitstream of the encoded video signal may include either be directly the calculated filter coefficients or the cross correlation which is necessary for calculating the Wiener filter and which cannot be determined at the decoder. Transmitting such filter side information may improve the quality of the filtering, but, on the other hand, requires additional bandwidth. Moreover, further improving the filter (for instance, by increasing its order, or by its separate determining and/or application to smaller parts of the video signal) may even more improve the video quality. However, the requirements on bandwidth for transmitting/storing such an encoded video data including the corresponding filter information will also increase.

From the state of the art, several approaches are known for the reduction of the signaling overhead caused by the transmission of the filter data. For instance, in the European patent application no. EP 2048886 combines an efficient syntax design with an efficient coding of the actual filter data. In order to reduce the total amount of filter data to be transmitted, the filters with certain symmetry are employed and the type of the symmetry is signaled within the syntax elements. Depending on the symmetry type, only a subset of the filter coefficients needs to be provided within the bitstream since the remaining filter coefficients are derived from the signaled ones. Alternatively or in addition, switching between a two-dimensional non-separable filter and a one-dimensional separable filter may be signaled. The signaling overhead for a one-dimensional separable filter is in general lower than the signaling overhead for a two-dimensional non-separable filter. However, the latter may provide an improved image quality. The amount of data necessary for signaling the filter data may be further reduced by applying a differential coding to the filter coefficients.

Under assumption of the spatial and temporal smoothness of image characteristics, other approaches include intra or inter coding of the filter coefficients in order to reduce the amount of overhead information.

A scalability of the filter data signaling for an adaptive interpolation filter may be further achieved by a syntax, in which a codeword is sent regularly, indicating whether a sub-pel position sample is interpolated by using a filter with adaptive coefficients or by using a filter with fixed coefficients.

SUMMARY OF THE INVENTION

The problem underlying the present invention is based on the observation that further improving the quality of video filtering is typically connected with increasing requirements of bandwidth for providing the filter information with the encoded video data. Especially for a low-rate encoded video signal, the increasing overhead of the filter information appears relatively high.

The aim of the present invention is to provide an efficient video signal encoding and decoding mechanism, which provides efficient and scalable signaling of the filter related information.

This is achieved by the features as set forth in the independent claims.

Preferred embodiments are the subject matter of the dependent claims.

It is the particular approach of the present invention to select a filter mode indicating a type of a filter for filtering a video signal. According to the selected filter mode, filter parameters are determined. The filter mode indicator is encoded and provided together with the filter parameters to the decoder site. The encoding assigns to a filter mode a codeword with a length according to the amount of the filter parameters to be provided for that filter mode.

Such an approach provides reduction of the signalling overhead due to encoding of the filter mode. The amount of overhead for signalling the filter mode reflects the total amount of data to be sent as filter related information, which enables a scalable control of the signalling overhead.

According to an aspect of the present invention, a method for encoding a video signal including at least one video frame is provided. Accordingly, a filter mode is selected for indicating a type of a filter for filtering of the video signal. According to the selected filter mode, filter parameters for setting-up the filter are determined. An indicator of the selected filter mode is encoded. The length of the encoded filter mode indicator depends on the amount of determined filter parameters for said filter mode. The encoded filter mode indicator and the determined filter parameters are then included into the bitstream together with the encoded video signal.

According to another aspect of the present invention, a method for decoding an encoded video signal including at least one video frame is provided. A filter mode indicator is extracted from a bitstream including the encoded video signal. The amount of filter parameters included in the bitstream for the filter mode depends on the length of the extracted filter mode indicator. According to the decoded filter mode indicating a type of filter for filtering of the video signal, the filter parameters are extracted from the bitstream. Based on the decoded filter mode and the extracted filter parameters, a filter for filtering of the video signal is set-up and the video signal is filtered.

According to still another aspect of the present invention, an encoder for encoding a video signal including at least one video frame is provided. The encoder comprises a mode selector for selecting a filter mode indicating a type of a filter for filtering of the video signal, and a filter design unit for determining filter parameters for setting-up the filter for according to the selected filter mode. The encoder further comprises a filter data encoder for encoding an indicator of the filter mode wherein the length of the encoded filter mode indicator depends on the amount of determined filter parameters for said filter mode. The filter data encoder is further capable of including the encoded filter mode indicator and the determined filter parameters to the bitstream together with the encoded video signal.

According to still another aspect of the present invention, a decoder for decoding an encoded video signal including at least one video frame is provided. The decoder comprises an extractor for extracting a filter mode indicator from a bitstream, the bitstream including the encoded video signal, and for extracting from the bitstream filter parameters in accordance with a decoded filter mode indicating a type of filter for filtering of the video signal. The decoder further comprises a filter data decoder for decoding the filter mode indicator encoded with the length depending on the amount of the filter parameters included in the bitstream for the filter mode. A filter design unit is capable of setting-up a filter for filtering of the video signal in accordance with the decoded filter mode and the extracted filter parameters. The decoder also comprises the filter for filtering the video signal.

In particular, the filter, for which the filter mode and the parameter data are selected and determined, respectively, is either a post filter or a loop filter. In accordance with a preferred embodiment of the present invention, the filter is an interpolation filter. However, the present invention is not limited and may be employed to any type of filter used during video encoding or decoding.

Preferably, the selection of the filter mode depends on the bitrate of the encoded video signal in such a manner that for a lower bitrate a filter mode with less filter parameters is selected and for a higher bitrate a filter mode with mode filter parameters is selected. Thus, the dependence is monotonic: with a decreasing bitrate, the amount of filter parameters does not increase and with an increasing bitrate, the amount of filter parameters does not decrease. The amount of filter parameters here refers to a number of filter parameters or to a number of bits for expressing the filter parameters. The filter parameters are preferably encoded using at least one of temporal or spatial prediction or difference coding, transformation coding or entropy coding such as arithmetic, Huffman, or integer codes, for instance Golomb, Elias, unary or any other codes.

The dependence on the overall bitrate of the encoded video signal enables maintaining the overhead caused by the filter data (filter mode and filter parameters) in an acceptable relative ratio in respect to the overall bitrate.

According to a preferred embodiment of the present invention, the filter mode indicates for an interpolation filter the sub-pel positions for which the filter parameters are included in the bitstream. The remaining sub-pel positions, for which no filter parameters are provided, are preferably interpolated using a pre-defined and fixed filter.

Such syntax provides a finer scalability of the overhead for signalling filter parameters for sub-pel positions. Instead or in addition to reducing the order of the filter for lower bitrates, different interpolation modes are defined.

However, the present invention is not limited to signalling the sub-pel positions to be interpolated by an adaptive filter. The filter mode may in general refer to any parameter of a filter influencing the length of the further parameters to be signaled for that filter. For instance, the filter mode may signal if the filter is two-dimensional and separable or one-dimensional non-separable. Alternatively, or in addition, a filter order may be signaled. Moreover, the symmetry type of such a filter may be signalled, or any other information related to the filter. The filter mode here refers to a filter type, to a parameter that may take several values. For instance, filter mode may take the following values "separable symmetric", "separable non-symmetric", "non-separable symmetric", "non-separable non-symmetric". Then the filter mode indicator refers to the syntax element embedded within the bitstream and carrying the filter mode information.

The filter parameters are preferably the filter coefficients. However, other filter parameters may also be provided, which enable calculating of the filter coefficients. In particular, the encoder determines the filter parameters using a knowledge of the original video signal input to the encoder (preferably before any lossy compression), since this input video signal is not available to the decoder. For instance, a cross-correlation between the input video signal and the reconstructed video signal and/or prediction error signal and/or prediction signal may be provided as filter parameters. This would allow, for example, calculating of the Wiener filter coefficients at the decoder. Any other filter parameters may be sent such as autocorrelation of the noise etc.

According to a preferred embodiment of the present invention, the filter mode indicator can have three values corresponding respectively to sending filter parameters for interpolating half-pel values, for interpolating half-pel values and sub-pel values in the lines and columns containing full-pel values, and for interpolating all sub-pel values. However, other constellations of the sub-pel positions are also possible. More than three modes may be defined in order to even more increase the scalability. For instance, a mode without the adaptive interpolation filter may also be defined.

Preferably, the filter mode (described above and having three values) for interpolating the half-pel values is encoded using a codeword of a single bit and the remaining filter modes are encoded each using a codeword of a two-bit length. The choice of an appropriate encoding depends on the number of values the mode may take and the amount of parameters with which the mode values are associated. Preferably a code with codewords of a variable length is used. This code may be applied in the entropy encoder, or by defining syntax elements conditioned on previously included syntax elements, or at any other level.

Preferably, the interpolation filter is a one-dimensional separable adaptive filter, and the filter parameters include filter coefficients calculated using Wiener filter estimation. However, the present invention may also be applied to signaling of a two-dimensional non-separable filter, or to switching between separable and non-separable filters. The filter coefficients may also be determined by solving other optimization problem than minimizing the mean square error and the present invention is not limited to Wiener estimation.

The frequency of determining and signalling of the filter mode and/or parameters may differ. Preferably, the filter mode and/or the filter parameters are determined per video frame or slice. However, the filter mode may be determined once per slice or frame and the filter parameters may be attached for each block separately. The filter mode may also be determined n a block or macroblock basis. Alternatively, the filter mode and/or the filter parameters may be determined per picture structure such as GOP, or per any other image picture structure or image area.

Preferably, the video signal is encoded and/or decoded based on the H.264/MPEG-4 AVC standard. The filter data may be provided within the Supplemental Enhancement Information message, especially if the filter data relate to a post filter. However, the present invention is not limited to H.264/MPEG-4 AVC and its enhancements and followers, and may be used for any video encoding mechanism, standardized or proprietary.

In accordance with another aspect of the present invention, a computer program product comprising a computer-readable medium having a computer-readable program code embodied thereon is provided, the program code being adapted to carry out the present invention.

In accordance with yet another aspect of the present invention, a system for transferring a video signal from an encoder side to a decoder side is provided, comprising an encoder as described above, a channel for storing or transmitting the encoded video signal, and a decoder as described above. In accordance with an embodiment of the present invention, the channel corresponds to the storing medium, for instance, a volatile or a non-volatile memory, an optic or a magnetic storing medium such as CD, DVD, BD or a hard disc, a Flash memory or any other storing means. In another embodiment of the present invention, the channel is a transmission medium, which can be formed by resources of a wireless or a wired system, or any combination of both in accordance with any standardized or proprietary transmission technology/system such as Internet, WLAN, UMTS, ISDN, xDSL, etc.

The above and other objects and features of the present invention will become more apparent from the following description and preferred embodiments given in conjunction with the accompanying drawings in which:

Figure 1    is a block diagram of a conventional H. 264/MPEG-4 AVC video encoder;

Figure 2    is a block diagram of a conventional H. 264/MPEG-4 AVC video decoder;

Figure 3    is a block diagram of an example of an H. 264/MPEG-4 AVC based video encoder for implementing the present invention;

Figure 4    is a block diagram of an example of an H. 264/MPEG-4 AVC based video decoder for implementing the present invention;

Figure 5    is a schematic drawing illustrating parts of an encoder in accordance with the present invention;

Figure 6    is a schematic drawing illustrating parts of a decoder in accordance with the present invention;

Figure 7    is a schematic drawing illustrating a sub-pel interpolation;

Figure 8    is a schematic drawing illustrating the interpolation filtering according to the present invention;

Figure 9    is a schematic drawing illustrating the syntax for signalling of the data related to filtering in accordance with the present invention ;

Figure 10   is a flow diagram of an encoding method according to an embodiment of the present invention;

Figure 11   is a flow diagram of a decoding method according to an embodiment of the present invention;

Figure 12   is a flow diagram of an example filter mode selection performed within the encoding method of the present invention;

Figure 13   is a schematic drawing of a system with an encoder and a decoder in accordance with the present invention;

Figure 14   is an illustration of a recording medium for storing a program realizing any of the embodiments of the present invention by means of a computer system;

Figure 15   is a block diagram showing an overall configuration of a content supply system for realizing content distribution service using coding and decoding approach of the present invention;

Figure 16   is a schematic drawing showing a cell phone for using the picture coding approach of the present invention;

Figure 17   is a block diagram illustrating the functional blocks of the cell phone exemplified in Figure 18; and

Figure 18   is illustrating a wireless digital system for incorporating the coding and decoding approach of the present invention.

DETAILED DESCRIPTION

Adaptive filtering during the video signal encoding and decoding may significantly improve the quality of the compressed and reconstructed image and thus, the efficiency of the video encoding/decoding. However, the amount of the resulting overhead necessary for signaling the filter information may also be considerable. The signaling overhead may thus harm the overall coding efficiency improvement. In particular, the signalling overhead necessary for signalling of the filter related information becomes relatively high in comparison to the compressed video signal if the video signal is strongly compressed. Such lower overall bit rates of the compressed video signal result, for instance, from encoding with a coarse quantization or from encoding with Group of Picture structures applying hierarchical B frames.

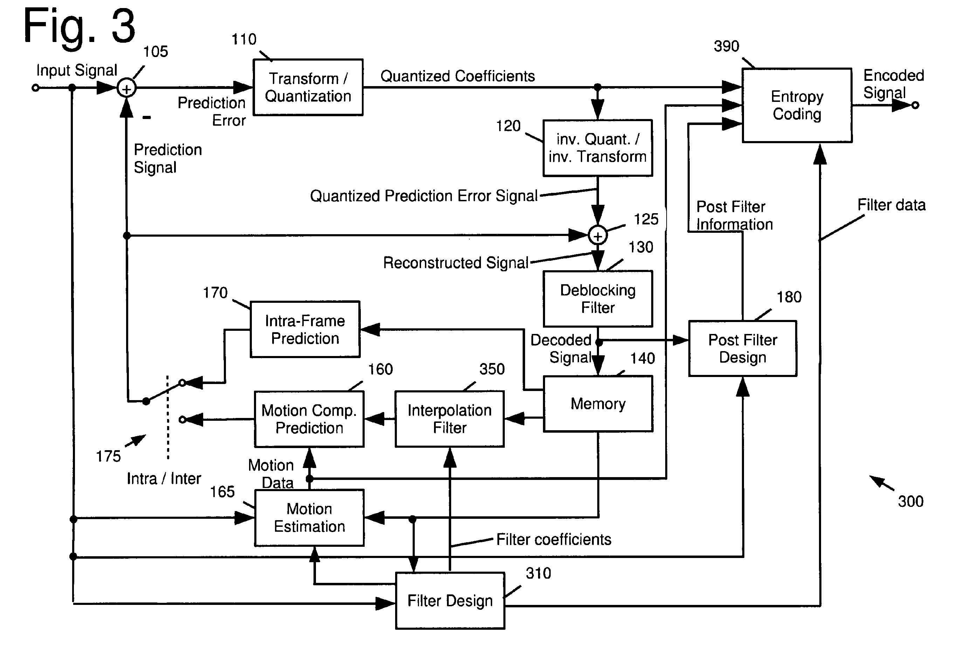

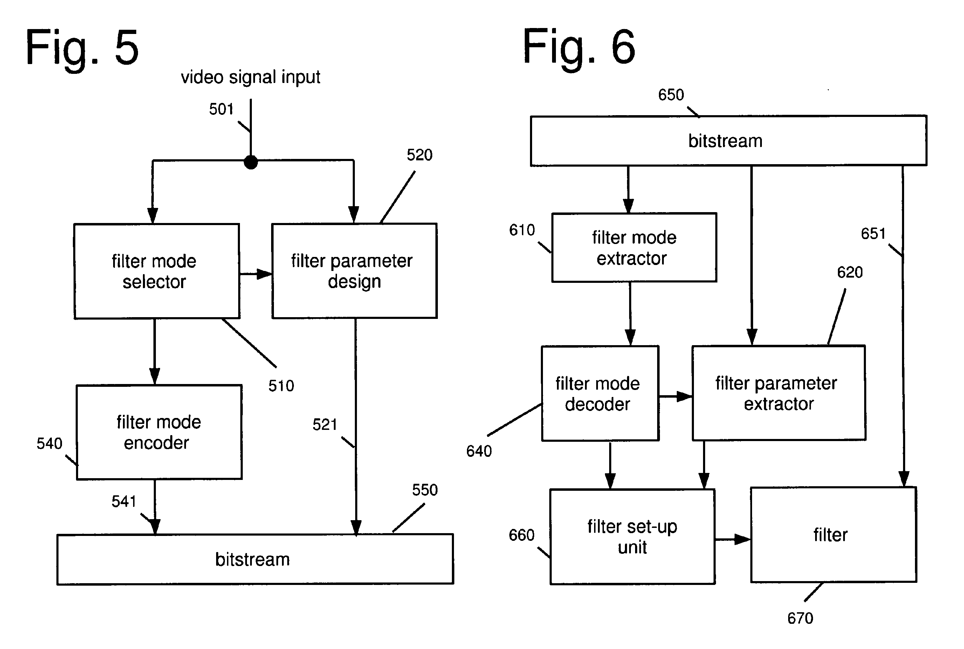

The present invention provides an encoder and a decoder enabling a finer scalability of the overhead caused by signalling the data related to filtering. Figure 5 illustrates an encoder in accordance with the present invention. An input video signal 501, which may be the original video signal (uncompressed and uncoded) and/or the prediction error signal and/or quantized prediction error signal, and/or prediction signal, is input to a mode selector 510 and to a filter parameter design 520. The mode selector 510 and the parameter design 520 may be comprised, for instance in the filter design unit 180 and/or 310 shown in Figures 1 and 3. The mode selector 510 is configured to select a filter type that is to be used for filtering of a video signal, for instance of the prediction error signal and/or quantized prediction error signal, and/or prediction signal. For that type of filter then filter parameters such as filter coefficients are determined in the parameter design unit 520. The filter parameter 521 and the encoded filter mode 541 are then included into the bitstream 550. The encoder 540 encodes the filter mode by applying a code that assigns a codeword (a syntax element) with a length, which depends on the amount of the related filter parameters 521. Depending on the filter kind, the filter data (mode and parameters) are to be signaled, a filter may be included in the encoder and a filtering may be performed using the filter of the type according to the filter mode and with the determined filter parameters. For instance, in case of loop filtering, the filter is included in the encoder and the video signal is also filtered. On the other hand, in case of a post filter, the filter mode and the filter parameters are selected and determined, respectively, and provided to the decoder site, where the filter is first applied. Moreover, the filter parameters may also be encoded by an entropy encoder and/or other encoder before being included into the bitstream.

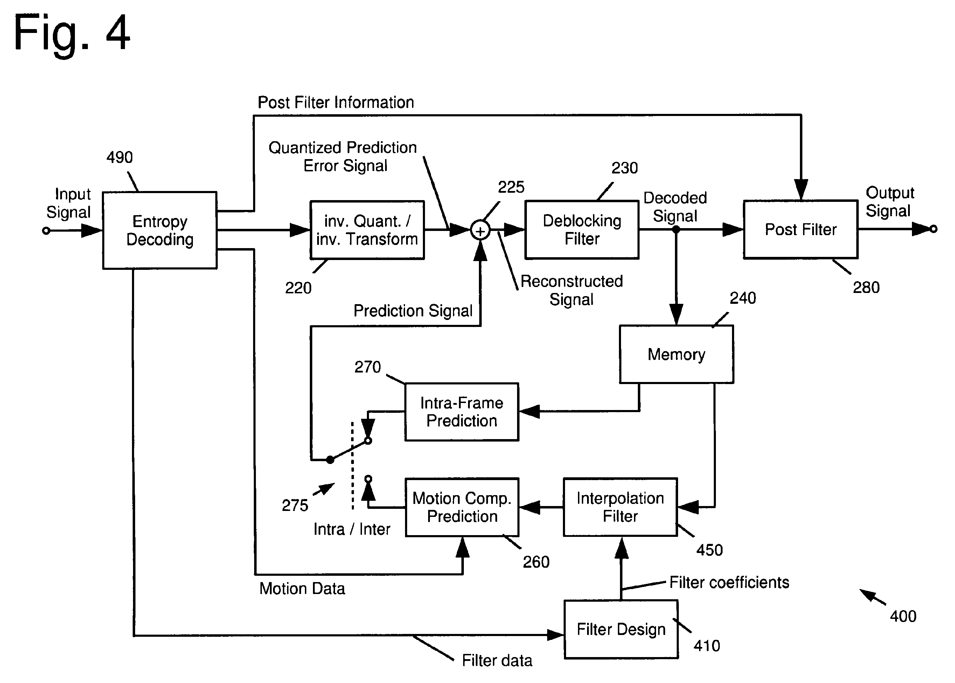

Figure 6 shows a decoder in accordance with the present invention, which can be applied to a signal encoded by the encoder described with reference to Figure 5. In particular, the filter data are parsed from the bitstream 650 by a filter data extractor 610 and 620 for extracting the filter mode and the filter parameters respectively. Furthermore, the video data are parsed and possibly decoded resulting in a video signal 651 from the bitstream 650. The extracted filter mode indicator is decoded resulting in the decoded filter mode, which is used to determine the amount of filter parameter to be extracted. The filter mode together with the filter parameters are provided to a filter set-up unit 660, which is configured to provide filter coefficients to the filter 670, which is then applied to the parsed (and decoded) video signal 651. The filter mode extractor, the filter parameter extractor and the filter mode decoder may be all a part of the entropy decoder 290 and 490 described with reference to Figures 2 and 4, respectively. Similarly, the filter set-up unit 660 may be comprised in the filter design unit 250 and 410.

In general, each of the filters used during the video encoding and decoding may be an adaptive filter. For instance, an adaptive post filter may be provided as shown in Figures 1 and 2. The adaptivity here refers to adapting of the filter parameters to the characteristics of the video signal to be filtered. In general, the more frequent is the adaption, the better quality has the reconstructed image. However, the increasing of the frequency of signalling the filter data (parameters) again results in increasing of the signalling overhead.

Figure 3 illustrates an example of an encoding apparatus in accordance with an embodiment of the present invention, capable of applying adaptive filtering. In this example, the present invention is embodied within an encoder 300 similar to the encoder 100 described with reference to Figure 1. The filter, for which the filter data is provided in this example is the interpolation filter 350 used in the estimation of the sub-pel motion during the motion estimation procedure. This interpolation filter is preferably a one-dimensional separable adaptive interpolation filter (SAIF). Signalling of filter parameters of a separable filter requires in general less signalling overhead than signalling of the filter parameters of a two-dimensional non-separable filter. A filter design unit 310 determines adaptively the filter coefficients, based on the input video signal (original, non-compressed) and based on the encoded (compressed) and reconstructed video signal from the memory 140. The filter design unit 310 provides the determined filter coefficients to the filter unit 350, which correspondingly filters the video signal in order to interpolate the sub-pel positions in the search region used for the motion estimation. The filter design unit determines the filter coefficients preferably by a Wiener filter estimation. However, other parameter estimation approaches may be used as well. The filter coefficients may be directly signalized within the filter data, i.e. embedded into the bitstream and directly used at the decoder. Alternatively, another filter related information may be signalized such as cross-correlation between the input video signal and the reconstructed video signal, or an autocorrelation of the noise, for instance, quantization noise. In general, the filter data includes information related to the input video signal, which is only available at the encoder. The filter data may further include various flags and/or information elements for signalling the type of the filter to be applied, the order of the filter, the type of a symmetry, etc. the filter data are in accordance with the present invention by an encoder 390 and included into the bitstream in accordance with a prescribed syntax. The syntax of the bitstream is typically a scope of standardization. The filter coefficients determined by the filter design unit 310 may also be provided to the motion estimation unit 165 for interpolation of the block to be searched.

The adaptive filtering may also be applied to filters other than post filter and/or the interpolation filter. In general, the deblocking filter or any other loop filter may also be determined and applied adaptively. More signals may be used for determining the filter data such as a prediction video signal, a prediction error signal, and a reconstructed video signal. The filter coefficients calculated for these signals may be determined separately and the filtering of these signals may also be performed separately. Such an approach provides an improved filtering performance. On the other hand, it increases the signalling overhead even more.

Figure 4 illustrates an example of a decoding apparatus in accordance with the present invention, compatible with the encoding apparatus 300 of Figure 3, and embodied within a decoder 400 similar to the decoder 200 described with reference to Figure 2. In particular, a decoder 490 parses the information elements from the bitstream and decodes them. The information elements related to the filtering (filter data) are also decoded. The decoded filter data is provided to a filter design unit 410, which sets up the interpolation filter 450 by providing it with filter coefficients. The filter coefficients are obtained either directly within the filter data or calculated based on the received filter data and/or based on the decoded video signal. In this example, the filter to be set up is an interpolation filter 450 for performing the sub-pel interpolation similarly as at the encoder side.

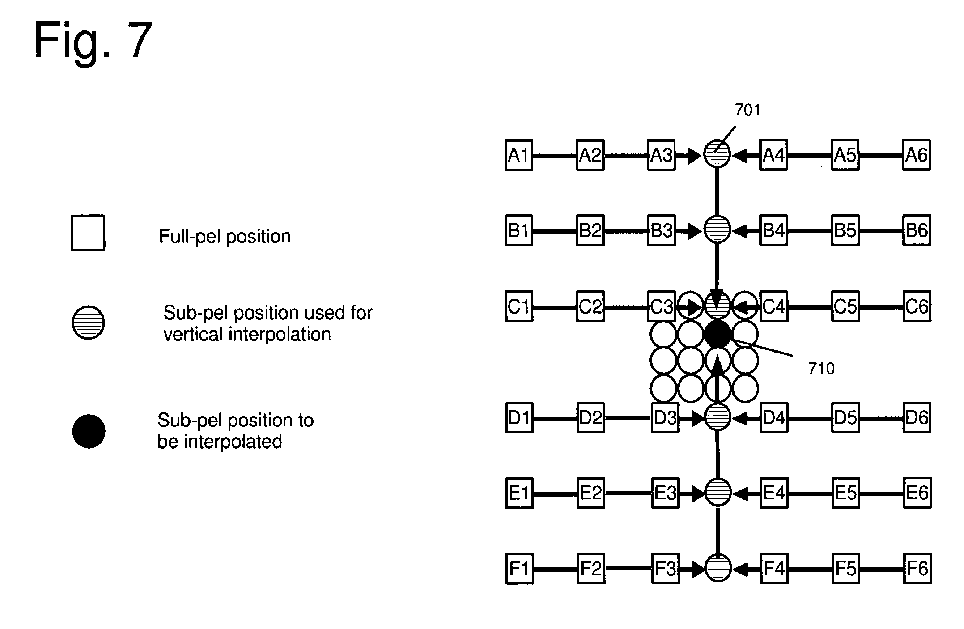

Figure 7 illustrates the principle of one-dimensional separable interpolation filtering which may be performed by the above described interpolation filters 350 and 450. From the full-pel positions represented by a square in this figure, the half-pel positions are obtained by applying an interpolation filter to the full-pel positions. For instance, the half-pel position 701 is obtained by applying a horizontal filter to full-pel positions A1 to A6. Similarly, the half-pel positions in the same column as 701 are interpolated. From all the interpolated half-pel positions in the same column as the half-pel position 701, another sub-pel positions like 710 may be obtained by applying a vertical filtering. In this way, all missing sub-pel positions are interpolated.

In order to improve the quality of the interpolation filtering, the filter coefficients for each sub-pel position (such as 701) are preferably provided adaptively. However, such an adaptive interpolation filtering leads, again, to a considerable increase of the signalling overhead.

In general, for the low rate video sequences, the information elements carrying the filter information require a significant amount of the overall bit rate. The state of the art approaches mainly relay on design of a rate reducing coding for the filter coefficients. Alternatively, a syntax of the information elements is designed so that a flag is provided signaling whether the adaptive filter information is provided or whether a fixed filter shall be used. Although these approaches may reduce the signalling overhead, their scalability is very limited and they application is equal regardless the bitrate of the encoded video signal.

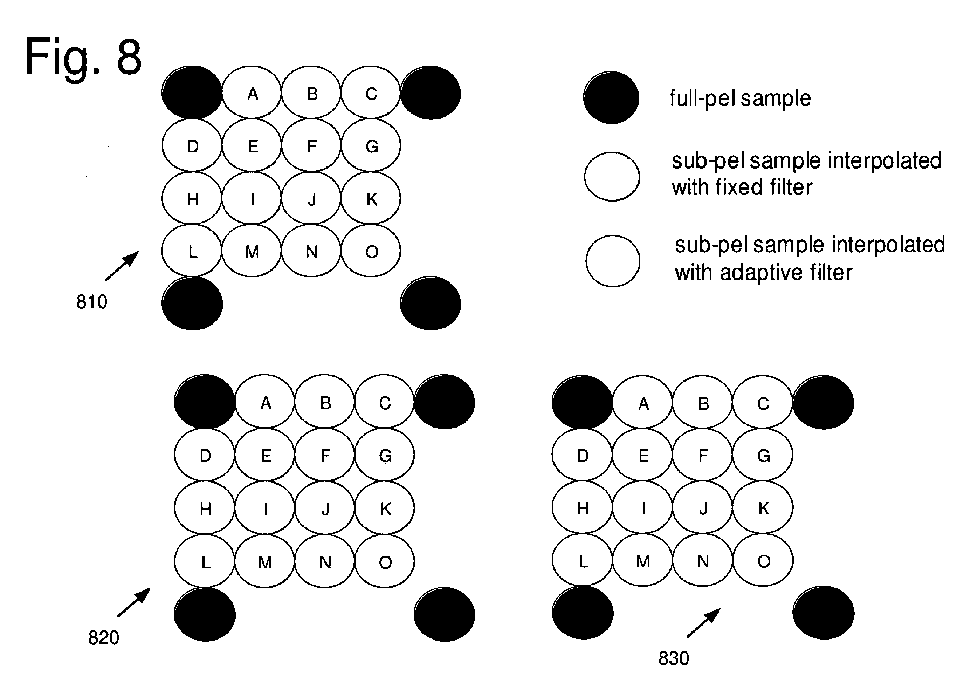

The present invention provides a scalable syntax and coding for signalling the information related to an adaptive filter. Figure 8 illustrates three possible modes 810, 820 and 830 of sub-pel interpolation filtering.

In the filter mode 810 (AIF mode 1), the sub-pel positions B, H, and J are interpolated using an adaptive interpolation filter. Thus, filter parameters are included in the bitstream for filtering of these three positions. The remaining sub-pel positions (A, C-G, I, K-O) are interpolated using a filter with predefined fixed filter coefficients.

In the filter mode 820 (AIF mode 2), more sub-pel positions are interpolated using an adaptive interpolation filter, than in the mode 810. In particular, the sub-pel positions A-D, H, J, and L are interpolated with an adaptive interpolation filter. For these positions, the filter parameters are embedded in the encoded video bitstream. The remaining positions E, F, G, I, K, M, N, and O are filtered using a filter with predefined fixed filter coefficients.

In the filter mode 830 (AIF mode 3), all sub-pel positions are interpolated using an adaptive interpolation filter.

The three filter modes 810, 820, and 830 provide a scalability in respect of the quality of filtering and the amount of filter parameters to be included within the encoded video stream. The more sub-pel positions are filtered using an adaptive filter, the more filter parameters have to be signaled and the better filtered image quality may be obtained. Thus, depending on the target bitrate of the encoded video stream (for instance, based on the quantization parameter and/or based on the GOP structure), one of these three modes may be selected. Preferably, the mode 810 is selected for low bitrates of the video bitstream and the mode 830 is selected for high rates of the video bitstream. Such a mode selection maintains the overhead caused by the signalling of the filter parameters proportional to the overall bitrate of the stream.

The filter mode is included into the encoded video bitstream. In accordance with the present invention, the filter mode is encoded using a variable length code. The variable length code assigns to a filter mode a codeword according to the amount of filter parameters that have to be included into the encoded video bitstream according to said filter mode. In particular, the smaller the amount of the filter parameters to be sent, the shorter the codeword for signalling the corresponding filter mode.

Encoding of the filter mode with such a variable length code enables a scalable coding of the data related to filtering. In particular, a filter mode with a shorter codeword and followed by less filter parameters may be selected for lower data rates of the overall video bitstream in order to keep the relative amount of filter signalling in respect to the overall bitrate overhead low. On the other hand, for higher overall bitrates, the filter modes with longer codewords may be chosen followed by more filter parameters.

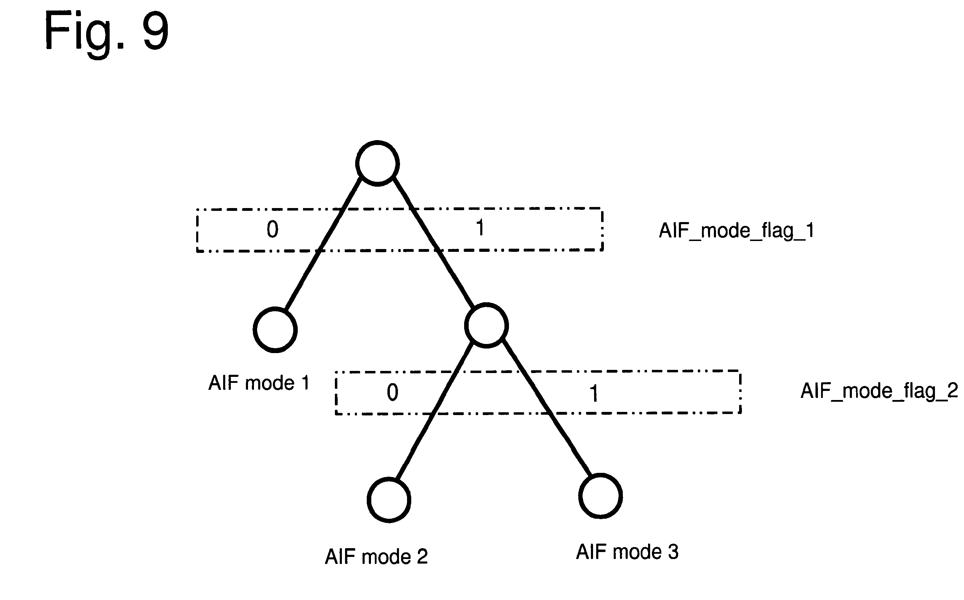

Figure 9 illustrates an example of the above described syntax for signalling the filter mode. The filter mode 810 (AIF mode 1) is signaled by a one-bit long filter mode indicator (AIF_mode_flag_1) with value "0". The filter modes 820 and 830 (AIF modes 2 and 3) are signaled by a two-bit long filter mode indicator (AIF_mode_flag_1 with value "1" and AIF_mode_flag_2) with the respective values "10" and "11".

According to an embodiment of the present invention, the filter mode in case of low bitrate (for instance in the case of pyramid coding) is signaled by a filter flag (AIF_mode_flag1 = 0). No additional information is necessary to signal this filter mode. At low bit rates it is beneficial to assign a short code word (here: only one flag) to signal the filter mode. In case of a higher bitrate (for instance a coding without bi-directional prediction), a second default filter mode is signaled by two consecutive flags AIF_mode_flag1 = 1 and AIF_mode_flag2 = 0. A longer code word signaling the filter mode in higher bit rate case does not essentially harm the coding efficiency. At very high bitrates, a third filter mode is signaled by two consecutive flags: AIF_mode_flag1 = 1 and AIF_mode_flag2 = 1. A longer code word signaling the filter mode in higher bit rate case does not importantly harm the coding efficiency.

This concept is advantageous as in certain implementations one of the three filter modes that occur quite often can be selected by sending a minor amount of overhead information, i.e. by transmitting only one or only two flags. Another modes may be signaled in addition. The maximum number of filters and thus filter coefficients is also limited by the adaptive interpolation filter modes in this invention. Thus, the amount of overhead information introduced by the transmission of filter coefficients can be controlled easily.

The following table shows an example of a syntax for signalling the filter mode by syntax elements of variable length as described above:

| ... | | |
|---|---|---|
| **AIF_mode_flag1** | uint(1)/ac | variable |
| if(AIF_mode_flag1){ | | |
| **AIF_mode_flag2** | uint(1)/ac | variable |
| } | | |
| ... | | |

In case the **AIF mode 1** is signaled (filter mode 810), the samples at sub-pel positions B, H and J are interpolated with adaptive filters at the encoder and the filter coefficients are provided to the decoder site by including them into the bitstream. For all other sub-pel positions, no additional filter coefficients are transmitted in order to reduce the coefficient overhead. In this mode, only the half-pel positions are interpolated with adaptive filters. It is very efficient to apply filters with adaptive coefficients to the half-pel positions as the resulting half-pel samples are applied further for the interpolation of quarter-pel position samples.

In case of **AIF mode 2,** the filter mode is signalled by longer code word (AIF_mode_flag1 = 1, AIF_mode_flag2 = 0) and the samples at sub-pel positions A, B, C, D, H, J and / filter coefficients are provided. For all other sub-pel positions, no additional filter coefficients are included into the bitstream in order to reduce the coefficient overhead. In addition to AIF mode 1, more overhead information (more filter coefficients) are transmitted for AIF mode 2 in order to increase the motion prediction precision. In that case it is advantageous to additionally apply filters with adaptive coefficients for the interpolation of A, C, D and I, as these samples are derived directly from full-pel samples. There is no influence of any prior interpolation on the results of the filter determination for positions A, C, D and I, leading to a high motion prediction precision. It is also important to interpolate sub-pel positions A, B, C, D, H and I very accurate by using filters with adaptive coefficients, as the resulting sub-pel position samples are used for further filter determination and for interpolation of all remaining sub-pel positions (E, F, G, I, J, K, M, N, O).

In case of **AIF mode 3,** the filter mode is signaled by the longer code word (AIF_mode_flag1 = 1 and AIF_mode_flag2 = 1). The filter coefficients are transmitted for all sub-pel positions. This mode offers a high prediction efficiency by allowing a high amount of overhead bit rate. It is the preferred mode at high overall bit rates. Instead of filter coefficients, other filter parameters may be provided such as offsets and/or cross-correlation between the input video signal and the reconstructed video signal, or auto-correlation of the quantization noise, etc.

The present invention is not limited to signalling the three filter modes. More modes may be signaled having the length of the codeword (the mode signalizing syntax element) shorter for modes requiring including less filter parameters. The present invention is also not limited to an interpolation filter and may be also applied to signalling of filter mode and parameters for other filter types such as post filter or de-blocking filter or any other loop-filter. The filter mode is thus not necessarily related to interpolating subsamples and may signalize a general type of a filter, for instance, type of symmetry, separable/non-separable, order of the filter, or any other filter type information influencing the amount of filter parameters to be sent. Then this mode is encoded by a variable length code with length of codewords depending on the number of filter parameters to be sent for said mode. Such a syntax and encoding provides scalability and allows to control the signaling overhead caused by the data related to filtering. One of the possibilities of the control is controlling according to the target bitrate of the encoded video stream. However, other concepts are possible as well.

In the particular example described with reference to Figures 8 and 9, the filter mode indicates the sub-pel positions, which are interpolated by an adaptive interpolation filter. The remaining sub-pel positions are interpolated by a filter with predefined filter coefficients. These filter coefficients may be fixed and set per default at the encoder and at the decoder. They may be equal or different for different sub-pel positions.

Preferably, the filter parameters are also encoded in order to further reduce the signalling overhead. In particular, the filter parameters may be encoded using any variable length code such as arithmetic code, Huffmann code, or integer codes such as Golomb, Elias or unary code. Moreover, the filter parameters may be encoded differentially in time (using the filter parameters of the previous video frames) and/or in space (using the filter parameters of the spatially neighbouring positions such as sub-pel positions or blocks). This even more reduces the signalling overhead necessary for filter related information.

With the present invention, the amount of overhead information for signalling of different adaptive interpolation filter modes and the transmission of filter coefficients is reduced significantly compared to prior art by limiting the maximum number of filter coefficients to be provided for each scheme. The tree-structured variable length signalling of the adaptive interpolation filter mode itself is also beneficial as it very efficient in case of low bit rate encoding. Furthermore, the computational complexity of an encoder implementation can be decreased with the present invention by reducing the total amount of adaptive interpolation filters in case of AIF mode 1 and AIF mode 2.

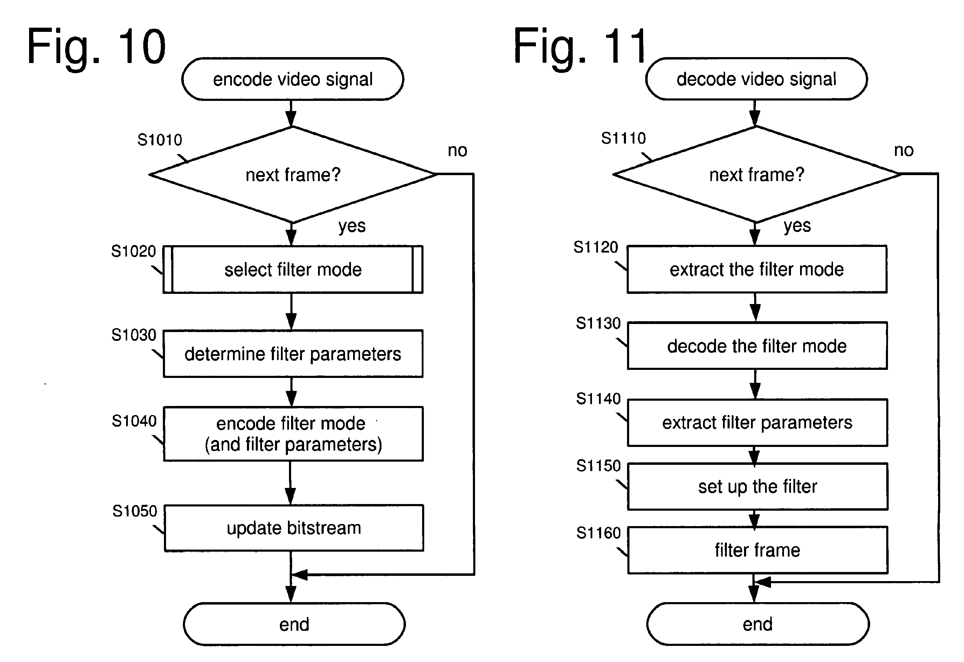

The methods for encoding and decoding in accordance with an embodiment of the present invention are illustrated in Figures 10 and 11, respectively. In this embodiment, the filter adaptation is performed on a video frame basis. The video signal encoding is performed for each video frame until there are no more frames ("no" in step S1010) to be encoded. First, the filter mode is selected S1020. Based thereon, the filter parameters are determined S1030. The filter mode is then encoded in step S1030, in which also the filter parameters may be encoded. The bitstream is updated in step S1050 by including therein the encoded filter mode and the filter parameter.

A method for decoding a video signal encoded, for instance, by using the encoding method described with reference to Figure 10 is illustrated in Figure 11. In particular, the bitstream comprising the encoded video signal is parsed frame-wise until there are no more frames to be parsed ("no" in step S1110). For each frame, the video data are parsed, the filter mode indicator is extracted S1120 and decoded S1130 and based on the decoded video mode, the filter parameters are extracted S1140. According to the decoded filter mode and the filter parameters, the filter is set-up, i.e., the filter coefficients are determined S1150. The filter set-up in this manner is then used to filter S1160 the parsed frame video data.

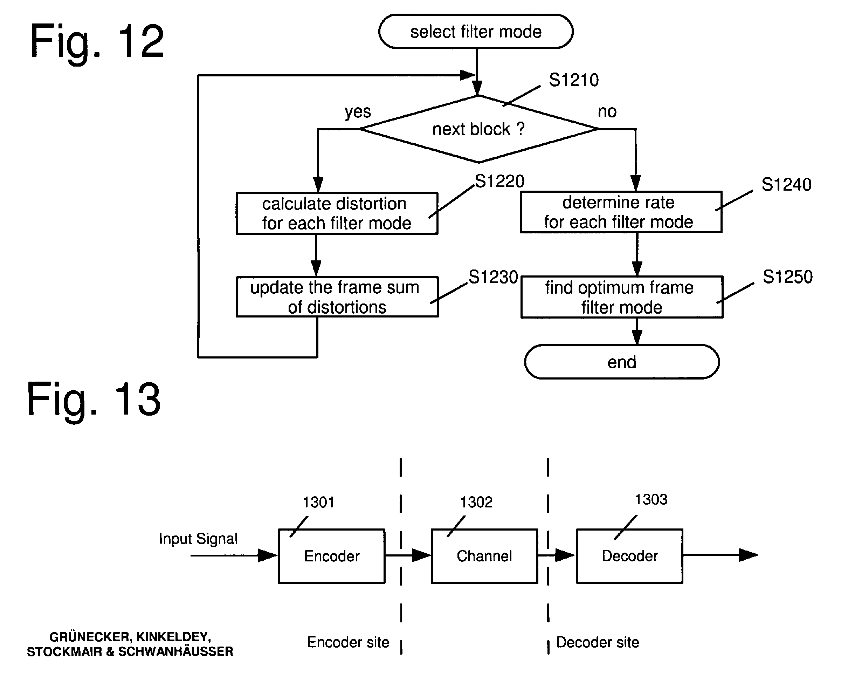

Figure 12 is a flow chart illustrating the method for selecting the filter mode in the step S1020 of the flow chart in Figure 10. For each block of the frame a distortion is calculated S1220 or estimated, the distortion resulting from applying a filter of each possible filter mode. A sum of distortions of the blocks belonging to the same frame is updated S1230 for each possible filter mode. After obtaining the frame distortions for all possible filter modes ("no" in step 1210), the amount of data necessary for signalling each mode and the filter parameters is determined in step S1240. Knowing the distortions and rates for each filter mode, an optimum filter mode is selected S1250 for the frame. The optimum filter mode is preferably selected by solving a predetermined (constrained) optimization problem.

In the following, an example encoder control according to the embodiment of the present invention described with reference to Figures 8 and 9 is shown, applying a sub-pel position dependent rate-distortion optimization for a separable adaptive interpolation filter, requiring only a minor complexity increase in comparison with present encoders. Accordingly, a rate-constrained rate-distortion (RD) optimization is applied in order to adaptively switch between the different adaptive interpolation filter modes. The rate constraint enables adapting of the amount of AIF signaling overhead to the overall rate of the encoded video. The aim of such a constrained optimization is to minimize the distortion D over the number of bits used R, wherein the number of bits used is constrained by Rc. Such an optimization task can be solved, for instance, using Lagrangian optimization, in which the distortion term is weighted with respect to the rate term by a so called Lagrange multiplier lambda $\lambda$. In particular, the Lagrangian optimization may be formulated as

$$\min\{J\}, \qquad \text{with } J = D + \lambda R,$$

wherein the minimization is performed for a particular value of $\lambda$. The value of A controls the constraint, for instance, low values of A result in emphasizing the distortion in the cost function $J$ and thus in a higher resulting rate. Similarly, higher values of A emphasize the influence of rate on the value of the cost function $J$ and thus, result in lower rates. The parameter $\lambda$ may be determined, for instance on a test set of video sequences according to the intended application. (More about applying of the Lagrangian optimization in video encoding can be found in G.J.Sullivan and T. Wiegand, "Rate-Distortion Optimization for Video Compression, "IEEE Magazine on Signal Processing, November 1998*).*

According to this embodiment, the rate-distortion optimization starts by deriving the coefficients of the adaptive filters for each sub-pel position, for instance, as shown in EP 1 983 759. Then, the costs for all possible filter modes, for instance the three filter modes described with reference to Figures 6 and 7, are calculated. In order to calculate the costs related to AIF mode 1, a block-based motion compensation is performed according to the scheme of AIF mode 1. In particular, both the predefined fixed filters and the derived adaptive filters are applied. The adaptive filter coefficients may be determined for each sub-pel position as coefficients of a Wiener filter, using the cross-correlation of the reconstructed and the input video signal and the autocorrelation of the reconstructed signal. For each such motion compensated block, a distortion measure is calculated with respect to the original block.

Any distortion measure may be applied such as sum of absolute pixel differences or a sum of absolute transformed differences (SATD), or any other metric based on relation between the motion compensated block and the original block. In general, a distortion metric calculated using pixel values may better reflect the distortion seen by the user. However, a distortion metric calculated using transformed differences require less computing, no additional video encoding/decoding is necessary. A sum of absolute differences is a measure which is simple to compute. Other measures such as sum of square differences, maximum difference, or statistic measures such as correlation may be used as well.

Based on the distortions calculated for all blocks in a video frame, a frame distortion is calculated. For instance, if the distortion measure is SATD, then the SATDs of all blocks are added to obtain the SATD for the entire frame.

Knowing the distortion, the bit rate necessary for encoding the filter mode and the filter parameters for all blocks is calculated for the AIF mode 1. This is preferably performed by encoding the filter mode and the filter parameters. However, the bitrate may also be estimated using a model considering the applied encoding. The bitrate may be expressed as a number of bits necessary to signal the filter mode and filter parameters per frame for the given mode.

Having the distortion per frame and the number of bits per frame, the value of the cost function $J1$ for AIF mode 1 is calculated by applying an appropriate value of $\lambda$ (for instance a smaller $\lambda$ for the higher overall bitrates and bigger $\lambda$ for lower overall bitrates).

Similarly, the value of the cost function $J2$ for AIF mode 2 is calculated. A block-based motion compensation (including both the predefined fixed filters and the derived adaptive filters) is performed according to the scheme of AIF mode 2 by applying the existing motion vectors and the already calculated filter coefficients. For each motion compensated block, the distortion measure is calculated with respect to the original block. The SATD values of all blocks in the frame are added, resulting in frame distortion for AIF mode 2. Then, the number of bits is calculated for the AIF mode 2 is calculated (bits used to signal AIF_mode_flag1, AIF_mode_flag2 and scheme specific coefficients of adaptive filters). The value of the cost function $J2$ for AIF mode 2 is then calculated using the Lagrange multiplier $\lambda$ same as for calculation of $J1$.

Still similarly, the value $J3$ of the cost function is calculated for the AIF mode 3. A block-based motion compensation (with only adaptive filters) is performed according to the scheme of AIF mode 3 by applying the existing motion vectors and the already calculated filter coefficients. For each motion compensated block, the distortion measure is calculated with respect to the original block and summed up for all blocks within the video frame. The number of bits necessary for signaling the filter data for AIF mode 3 is then calculated (AIF_mode_flag1, AIF_mode_flag2 and adaptive coefficients for all filters). Based thereon, the value $J3$ of the cost function for AIF mode 3 is calculated by applying $\lambda$.

Finally, from the three AIF modes the AIF mode is selected, which leads to min{$J1$, $J2$, $J3$}, i.e. to minimum value of the cost function $J$. The selected filter mode is encoded and the filter parameters are preferably also encoded and attached together with the filter mode to the bitstream of the encoded video signal.

In order to implement the above described optimization at the encoder, for instance such as the H. 264/MPEG-4 AVC encoder described with reference to Figures 1 and 3, three additional motion compensation steps are necessary (for obtaining the values of the cost function for each of the three filter modes). Compared to the extensive motion estimation passes used in such an encoder for rate-distortion optimization, this additional complexity is expected to be rather minor.

Compared to the definition of direct or skip modes, this syntax/encoding scheme offers fine and granular scaling of the overhead information: One or two flags are coded to signal the selected AIF mode. The shorter codeword indicates AIF mode 1 related to lower overall bitrate, whereas the longer codeword indicates AIF modes 2 and 3 related to higher overall bitrate. This also enables keeping the signaling overhead monotonically dependent on the overall bitrate.

The above example of selecting the filter mode by solving an optimization problem has the advantage of an accurate adaption of the filter mode with respect to the required constraints such as rate limitation for the signalling of filter related data. Such an adaption increases the efficiency of the video encoding considerably. However, the present invention is not limited to selecting the filter mode by solving an optimization problem. Alternatively, the filter mode may be selected based on the encoder settings such as GOP structure, quantization parameter, resolution, frame rate, etc. The filter mode may also be selected as a setting at the encoder, for instance, by a user.

It is also possible to derive the filter mode automatically based on the encoder and/or profile settings in the same way at the encoder and the decoder site without having to explicitly signal it. The profile or level indicator may be associated with a particular filter mode. For instance, in terms of the embodiment described with reference to Figures 8 and 9, a "baseline"-like profile may automatically apply AIF mode 1 whereas a profile comparable to "high" may use AIF mode 3 only. Even if AIF mode would be selected automatically, the filter mode may be further signaled to indicate a possible symmetry or order of the filter. Thus, the filter may in general be characterized by a filter type which is default (for instance a final response filter, a separable filter) and/or derived based on the profile, level or encoder parameters (for instance AIF mode), and/or signaled (for instance a filter with particular symmetry or order).

Figure 13 illustrates a system for transferring encoded video data from an encoder side to a decoder side in accordance with the present invention. An input video signal is encoded by an encoder 1301 and provided to a channel 1302. The encoder 1301 is an encoder in accordance with any of the embodiments of the present invention as described above. The channel 1302 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 1302 or an application for transferring the encoded video signal into the storage. The encoded video signal is then obtained from the channel 1302 by a decoder 1303. The decoder 1303 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

According to a further embodiment, it is possible to easily perform the processing shown in the above embodiments in an independent computing system by recording a program for realizing the picture coding method and the picture decoding method shown in the above-mentioned embodiments onto the storage medium such as a flexible disk.

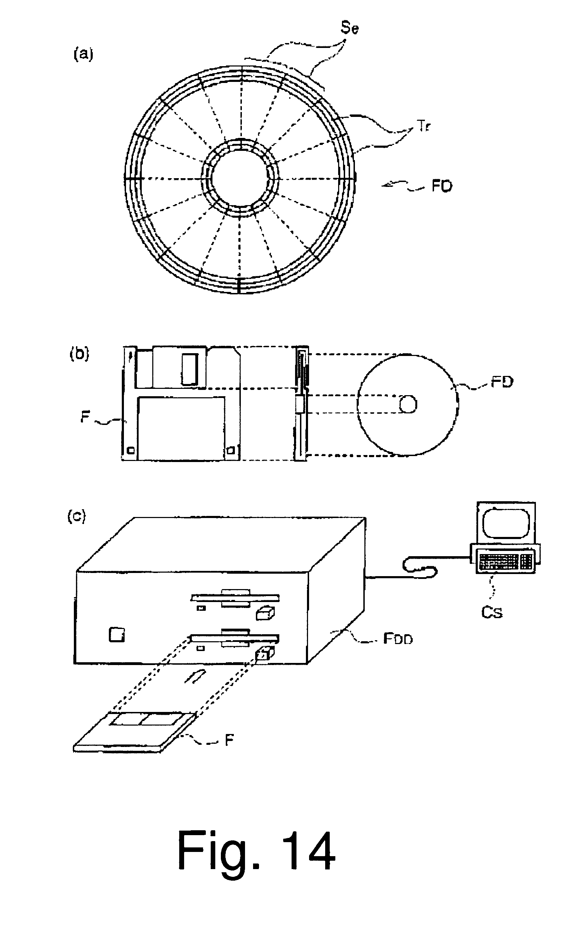

Figure 14 is an illustration of a recording medium for storing a program for realizing any of the described embodiments by a computer system.

Figure 14, part (b) shows a full appearance of a flexible disk, its structure at cross section and the flexible disk itself whereas Figure 14, part (a) shows an example of a physical format of the flexible disk as a main body of a storing medium. A flexible disk FD is contained in a case F, a plurality of tracks Tr are formed concentrically from the periphery to the inside on the surface of the disk, and each track is divided into 16 sectors Se in the angular direction. Therefore, as for the flexible disk storing the above-mentioned program, data as the aforementioned program is stored in an area assigned for it on the flexible disk FD.

Figure 14, part (c) shows a structure for recording and reading out the program on the flexible disk FD. When the program is recorded on the flexible disk FD, the computing system Cs writes in data as the program via a flexible disk drive. When the coding device and the decoding device are constructed in the computing system by the program on the flexible disk, the picture coding method and a picture decoding method as the program is read out from the flexible disk drive and then transferred to the computing system Cs.

The above explanation is made on an assumption that a storing medium is a flexible disk, however, the same processing can also be performed using an optical disk. In addition, the storing medium is not limited to a flexible disk and an optical disk, but any other medium such as an IC card and a ROM cassette capable of recording a program can be used.

According to still another embodiment, the following is an explanation of the applications of the picture coding method as well as the picture decoding method as shown in the above-mentioned embodiments, and a system using them.

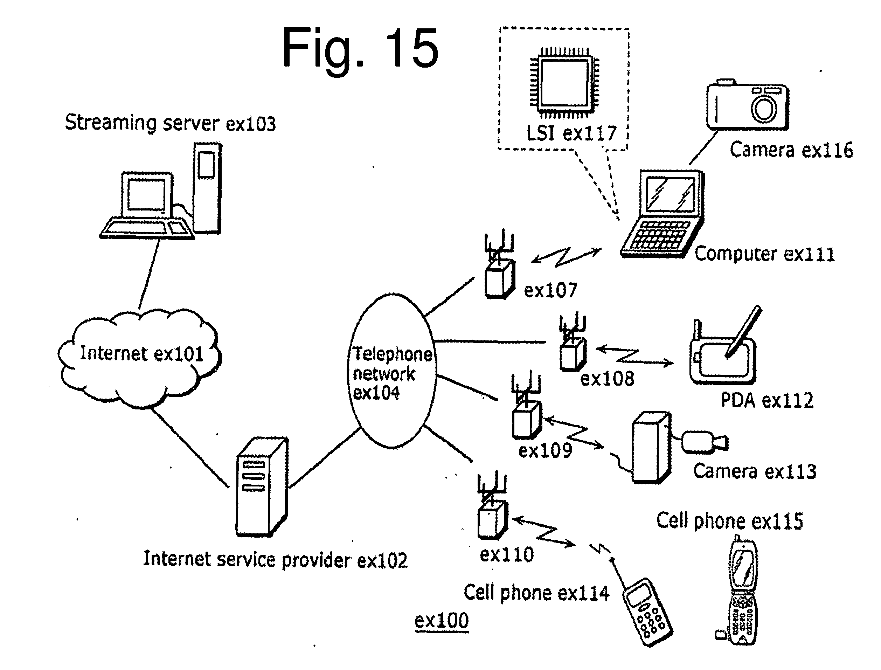

Figure 15 is a block diagram showing an overall configuration of a content supply system ex100 for realizing content distribution service. The area for providing communication service is divided into cells of desired size, and cell sites ex107 to ex110, which are fixed wireless stations are placed in respective cells.

This content supply system ex100 is connected to devices such as Internet ex101, an Internet service provider ex102, a telephone network ex104, as well as a computer ex111, a PDA (Personal Digital Assistant) ex112, a camera ex113, a cell phone ex114 and a cell phone with a camera ex115 via the cell sites ex107 to ex110.

However, the content supply system ex100 is not limited to the configuration as shown in Figure 15 and may be connected to a combination of any of them. Also, each device may be connected directly to the telephone network ex104, not through the cell sites ex107 to ex110.

The camera ex113 is a device capable of shooting video such as a digital video camera. The cell phone ex114 may be a cell phone of any of the following system: a PDC (Personal Digital Communications) system, a CDMA (Code Division Multiple Access) system, a W-CDMA (Wideband-Code Division Multiple Access) system or a GSM (Global System for Mobile Communications) system, a PHS (Personal Handyphone System) or the like.

A streaming server ex103 is connected to the camera ex113 via the telephone network ex104 and also the cell site ex109, which realizes a live distribution or the like using the camera ex113 based on the coded data transmitted from the user. Either the camera ex113 or the server which transmits the data may code the data. Also, the picture data shot by a camera ex116 may be transmitted to the streaming server ex103 via the computer ex111. In this case, either the camera ex116 or the computer ex111 may code the picture data. An LSI ex117 included in the computer ex111 or the camera ex116 actually performs coding processing. Software for coding and decoding pictures may be integrated into any type of storage medium (such as a CD-ROM, a flexible disk and a hard disk) that is a recording medium which is readable by the computer ex111 or the like. Furthermore, a cell phone with a camera ex115 may transmit the picture data. This picture data is the data coded by the LSI included in the cell phone ex115.

The content supply system ex100 codes contents (such as a music live video) shot by a user using the camera ex113, the camera ex116 or the like in the same way as shown in the above-mentioned embodiments and transmits them to the streaming server ex103, while the streaming server ex103 makes stream distribution of the content data to the clients at their requests.

The clients include the computer ex111, the PDA ex112, the camera ex113, the cell phone ex114 and so on capable of decoding the above-mentioned coded data. In the content supply system ex100, the clients can thus receive and reproduce the coded data, and can further receive, decode and reproduce the data in real time so as to realize personal broadcasting.

When each device in this system performs coding or decoding, the picture coding method or the picture decoding method shown in the above-mentioned embodiments can be used.

A cell phone will be explained as an example of the device.

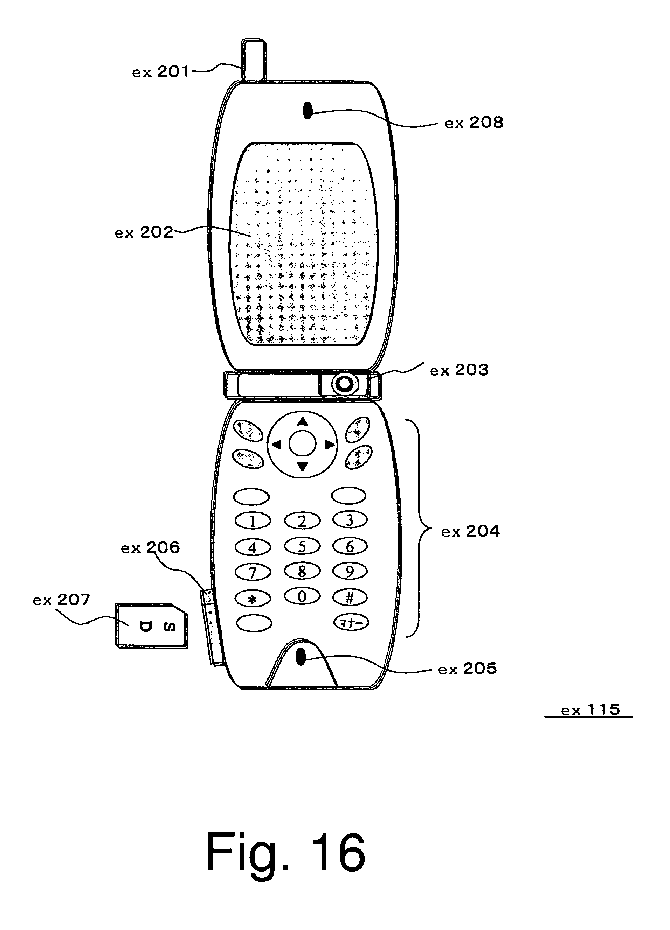

Figure 16 is a diagram showing the cell phone ex115 using the picture coding method and the picture decoding method explained in the above-mentioned embodiments. The cell phone ex115 has an antenna ex201 for communicating with the cell site ex110 via radio waves, a camera unit ex203 such as a CCD camera capable of shooting moving and still pictures, a display unit ex202 such as a liquid crystal display for displaying the data such as decoded pictures and the like shot by the camera unit ex203 or received by the antenna ex201, a body unit including a set of operation keys ex204, a audio output unit ex208 such as a speaker for outputting audio, a audio input unit ex205 such as a microphone for inputting audio, a storage medium ex207 for storing coded or decoded data such as data of moving or still pictures shot by the camera, data of received e-mails and that of moving or still pictures, and a slot unit ex206 for attaching the storage medium ex207 to the cell phone ex115. The storage medium ex207 stores in itself a flash memory element, a kind of EEPROM (Electrically Erasable and Programmable Read Only Memory) that is a nonvolatile memory electrically erasable from and rewritable to a plastic case such as an SD card.

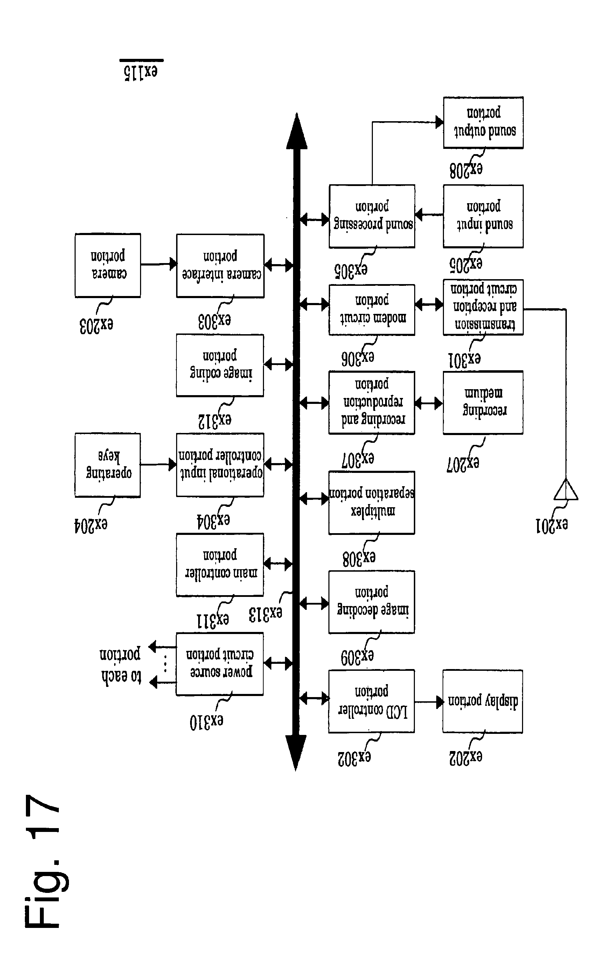

Next, the cell phone ex115 will be explained with reference to Figure 17. In the cell phone ex115, a main control unit ex311, designed in order to control overall each unit of the main body which contains the display unit ex202as well as the operation keys ex204, is connected mutually to a power supply circuit unit ex310, an operation input control unit ex304, a picture coding unit ex312, a camera interface unit ex303, an LCD (Liquid Crystal Display) control unit ex302, a picture decoding unit ex309, a multiplexing/demultiplexing unit ex308, a read/write unit ex307, a modem circuit unit ex306and a audio processing unit ex305via a synchronous bus ex313.

When a call-end key or a power key is turned ON by a user's operation, the power supply circuit unit ex310 supplies respective units with power from a battery pack so as to activate the camera attached digital cell phone ex115 as a ready state.

In the cell phone ex115, the audio processing unit ex305 converts the audio signals received by the audio input unit ex205 in conversation mode into digital audio data under the control of the main control unit ex311 including a CPU, ROM and RAM, the modem circuit unit ex306 performs spread spectrum processing of the digital audio data, and the communication circuit unit ex301 performs digital-to-analog conversion and frequency conversion of the data, so as to transmit it via the antenna ex201. Also, in the cell phone ex115, the communication circuit unit ex301 amplifies the data received by the antenna ex201 in conversation mode and performs frequency conversion and analog-to-digital conversion to the data, the modem circuit unit ex306 performs inverse spread spectrum processing of the data, and the audio processing unit ex305 converts it into analog audio data, so as to output it via the audio output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs digital-to-analog conversion and frequency conversion for the text data, the data is transmitted to the cell site ex110 via the antenna ex201.

When picture data is transmitted in data communication mode, the picture data shot by the camera unit ex203 is supplied to the picture coding unit ex312 via the camera interface unit ex303. When it is not transmitted, it is also possible to display the picture data shot by the camera unit ex203 directly on the display unit ex202 via the camera interface unit ex303 and the LCD control unit ex302.

The picture coding unit ex312, which includes the picture coding apparatus as explained in the present invention, compresses and codes the picture data supplied from the camera unit ex203 by the coding method used for the picture coding apparatus as shown in the above-mentioned first embodiment so as to transform it into coded picture data, and sends it out to the multiplexing/demultiplexing unit ex308. At this time, the cell phone ex115 sends out the audio received by the audio input unit ex205 during the shooting with the camera unit ex203 to the multiplexing/demultiplexing unit ex308 as digital audio data via the audio processing unit ex305.

The multiplexing/demultiplexing unit ex308 multiplexes the coded picture data supplied from the picture coding unit ex312 and the audio data supplied from the audio processing unit ex305 using a predetermined method, then the modem circuit unit ex306 performs spread spectrum processing of the multiplexed data obtained as a result of the multiplexing, and lastly the communication circuit unit ex301 performs digital-to-analog conversion and frequency conversion of the data for the transmission via the antenna ex201.

As for receiving data of a moving picture file which is linked to a Web page or the like in data communication mode, the modem circuit unit ex306 performs inverse spread spectrum processing of the data received from the cell site ex110 via the antenna ex201, and sends out the multiplexed data obtained as a result of the inverse spread spectrum processing.

In order to decode the multiplexed data received via the antenna ex201, the multiplexing/demultiplexing unit ex308 separates the multiplexed data into a bit stream of picture data and that of audio data, and supplies the coded picture data to the picture decoding unit ex309 and the audio data to the audio processing unit ex305 respectively via the synchronous bus ex313.

Next, the picture decoding unit ex309, including the picture decoding apparatus as explained in the above-mentioned invention, decodes the bit stream of picture data using the decoding method corresponding to the coding method as shown in the above-mentioned embodiments to generate reproduced moving picture data, and supplies this data to the display unit ex202 via the LCD control unit ex302, and thus the picture data included in the moving picture file linked to a Web page, for instance, is displayed.

At the same time, the audio processing unit ex305 converts the audio data into analog audio data, and supplies this data to the audio output unit ex208, and thus the audio data included in the moving picture file linked to a Web page, for instance, is reproduced.

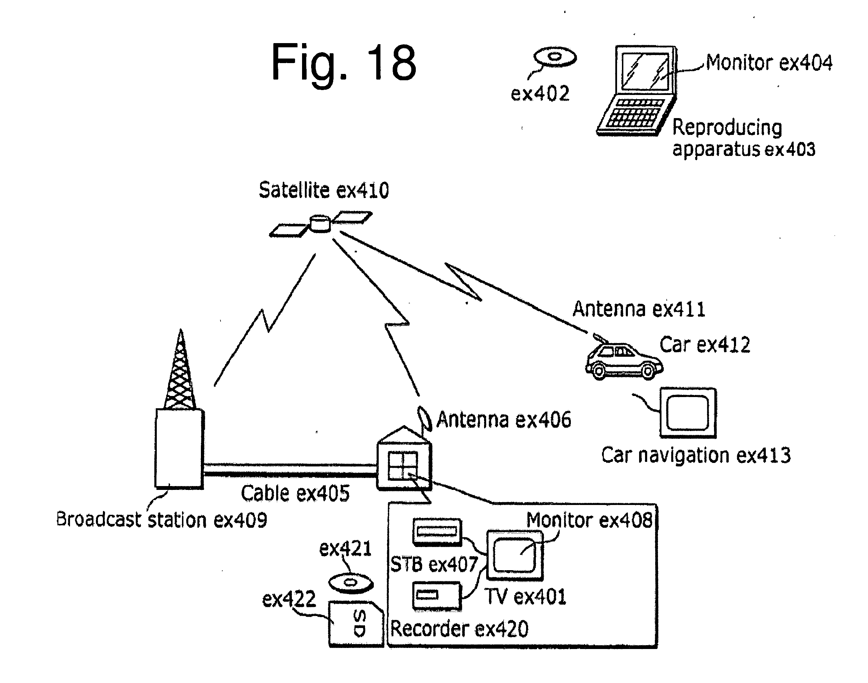

The present invention is not limited to the above-mentioned system as such ground-based or satellite digital broadcasting has been in the news lately and at least either the picture coding apparatus or the picture decoding apparatus described in the above-mentioned embodiments can be incorporated into a digital broadcasting system as shown in Figure 18. More specifically, a bit stream of video information is transmitted from a broadcast station ex409 to or communicated with a broadcast satellite ex410 via radio waves.

Upon receipt of it, the broadcast satellite ex410 transmits radio waves for broadcasting. Then, a home-use antenna ex406 with a satellite broadcast reception function receives the radio waves, and a television (receiver) ex401 or a set top box (STB) ex407 decodes the bit stream for reproduction. The picture decoding apparatus as shown in the above-mentioned embodiment can be implemented in the reproducing apparatus ex403 for reading out and decoding the bit stream recorded on a storage medium ex402 that is a recording medium such as CD and DVD. In this case, the reproduced video signals are displayed on a monitor ex404. It is also conceivable to implement the picture decoding apparatus in the set top box ex407 connected to a cable ex405 for a cable television or the antenna ex406 for satellite and/or ground-based broadcasting so as to reproduce them on a monitor ex408 of the television ex401. The picture decoding apparatus may be incorporated into the television, not in the set top box. Also, a car ex412 having an antenna ex411 can receive signals from the satellite ex410 or the cell site ex107 for reproducing moving pictures on a display device such as a car navigation system ex413 set in the car ex412.

Furthermore, the picture coding apparatus as shown in the above-mentioned embodiments can code picture signals and record them on a recording medium. As a concrete example, a recorder ex420 such as a DVD recorder for recording picture signals on a DVD disk ex421, a disk recorder for recording them on a hard disk can be cited. They can be recorded on an SD card ex422. If the recorder ex420 includes the picture decoding apparatus as shown in the above-mentioned embodiments, the picture signals recorded on the DVD disk ex421 or the SD card ex422 can be reproduced for display on the monitor ex408. As for the structure of the car navigation system ex413, the structure without the camera unit ex203, the camera interface unit ex303 and the picture coding unit ex312, out of the components shown in Figure17, is conceivable. The same applies for the computer ex111, the television (receiver) ex401 and others.

In addition, three types of implementations can be conceived for a terminal such as the above-mentioned cell phone ex114; a sending/receiving terminal implemented with both a coder and a decoder, a sending terminal implemented with a coder only, and a receiving terminal implemented with a decoder only. As described above, it is possible to use the picture coding method or the picture decoding method described in the above-mentioned embodiments for any of the above-mentioned devices and systems, and by using this method, the effects described in the above-mentioned embodiments can be obtained.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JVT.

Summarizing, the present invention provides a video signal encoding and decoding mechanism involving a design of a filter for filtering of the video signal. Accordingly, at the encoder a filter mode is selected and in accordance therewith filter parameters are determined. The filter mode indicator is then encoded. The size of the encoded filter mode indicator depends on the amount of filter parameters to be provided for the encoded filter mode. The decoder thus parses the filter parameters according to the decoded filter mode indicator.

**Claims**

1. A method for encoding a video signal including at least one video frame, the method comprising the steps of:

     selecting (S1020) a filter mode indicating a type of a filter for filtering of the video signal;
     determining (S1030) filter parameters for setting-up the filter for filtering of the video signal according to the filter mode;
     encoding (S1040) an indicator of the filter mode with a variable length code, in which the length of a codeword depends on the amount of determined filter parameters for said filter mode; and
     including (S1050) the encoded filter mode indicator and the determined filter parameters to the bitstream together with the encoded video signal.

2. A method for decoding an encoded video signal including at least one video frame, the method comprising the steps of:

     extracting (S1120) a filter mode indicator from a bitstream including the encoded video signal;
     decoding (S1130) the filter mode indicator encoded with a variable length code, in which the length of a codeword depends on the amount of filter parameters included in the bitstream for the filter mode;
     extracting (S1140) from the bitstream the filter parameters in accordance with the decoded filter mode indicating a type of filter for filtering of the video signal; and
     setting-up (S1150) a filter for filtering of the video signal in accordance with the filter mode and the filter parameters and filtering (S1160) the video signal.

3. A method according to claim 1 wherein the selection (S1020) of the filter mode depends on the bitrate of the encoded video signal in such a manner that for a lower bitrate a filter mode with less filter parameters is selected.

4. A method according to any of claims 1 to 3 wherein the filter mode indicates for an interpolation filter the sub-pel positions (A-O) for which the filter parameters are included in the bitstream.

5. A method according to any of claims 1 to 4 wherein the filter mode indicator can have three values (AIF mode 1, AIF mode 2, AIF mode 3) corresponding respectively to sending filter parameters for interpolating half-pel values (810), for interpolating half-pel values and sub-pel values in the lines and columns containing full-pel values (820), and for interpolating all sub-pel values (830).

6. A method according to claim 5 wherein the filter mode (810) for interpolating the half-pel values is encoded using a codeword of a single bit (AIF_mode_flag_1) and the remaining filter modes are encoded each using a codeword of a two-bit length (AIF_mode_flag_1, AIF_mode_flag_2).

7. A method according to any of claims 4 to 6 wherein the interpolation filter (350, 450) is a one-dimensional separable adaptive filter, and the filter parameters include filter coefficients calculated using Wiener filter estimation.

8. A computer program product comprising a computer readable medium having a computer readable program code embodied thereon, the program code being adapted to carry out the method according to any of claims 1 to 7.

9. An apparatus for encoding a video signal (501) including at least one video frame, comprising:

   a mode selector (510) for selecting a filter mode indicating a type of a filter (670) for filtering of the video signal;
   a filter design unit (520) for determining filter parameters (521) for setting-up the filter (670) for filtering of the video signal according to the filter mode;
   a filter data encoder (540) for encoding an indicator (541) of the filter mode with a variable length code, in which the length of a codeword depends on the amount of determined filter parameters for said filter mode, and for including the encoded filter mode indicator and the determined filter parameters to the bitstream (550) together with the encoded video signal.

10. An apparatus for decoding an encoded video signal (650) including at least one video frame, comprising:

    an extractor (610, 620) for extracting a filter mode indicator from a bitstream including the encoded video signal (650) and for extracting from the bitstream filter parameters in accordance with a decoded filter mode indicating a type of filter for filtering of the video signal (651); and;
    a filter data decoder (640) for decoding the extracted filter mode indicator encoded with a variable length code, in which the length of a codeword depends on the amount of the filter parameters included in the bitstream (650) for the filter mode;
    a filter design unit (660) for setting-up a filter (670) for filtering of the video signal (651) in accordance with the filter mode and the filter parameters; and
    the filter (670) for filtering the video signal (651).

11. An apparatus according to claim 9 wherein the mode selector (510) is configured to select the filter mode in dependence on the bitrate of the encoded video signal in such a manner that for a lower bitrate a filter mode with less filter parameters is selected.

12. An apparatus according to any of claims 9 to 11 wherein the filter mode indicates for an interpolation filter (350, 450) the sub-pel positions (A-O) for which the filter parameters are included in the bitstream.

13. An apparatus according to any of claims 9 to 12 wherein the filter mode indicator can have three values (AIF mode 1, AIF mode 2, AIF mode 3) corresponding respectively to sending filter parameters for interpolating half-pel values (810), for interpolating half-pel values and sub-pel values in the lines and columns containing full-pel values (820), and for interpolating all sub-pel values (830).

14. An apparatus according to claim 13 wherein the filter mode for interpolating the half-pel values is encoded using a codeword of a single bit (AIF_mode_flag_1) and to encode the remaining filter modes each using a codeword of a two-bit length (AIF_mode_flag_1, AIF_mode_flag_2).

15. An apparatus according to any of claims 12 to 14 wherein the interpolation filter (350, 450) is a one-dimensional separable adaptive filter, and the filter parameters include filter coefficients calculated using Wiener filter estimation.

# Fig. 1

Input Signal

105

Prediction Error

110 Transform / Quantization

Quantized Coefficients

120 inv. Quant. / inv. Transform

Quantized Prediction Error Signal

125

Reconstructed Signal

130 Deblocking Filter

Decoded Signal

140 Memory

150 Interpolation Filter

160 Motion Comp. Prediction

Motion Data

165 Motion Estimation

170 Intra-Frame Prediction

175 Intra / Inter

Prediction Signal

−

190 Entropy Coding

Encoded Signal

Post Filter Information

180 Post Filter Design

100

EP66741

GRÜNECKER, KINKELDEY,
STOCKMAIR & SCHWANHÄUSSER

18

# Fig. 2

EP 2 296 380 A1

# Fig. 3

EP 2 296 380 A1

Fig. 4

Fig. 6

Fig. 5

# Fig. 7

Full-pel position

Sub-pel position used for vertical interpolation

Sub-pel position to be interpolated

EP 2 296 380 A1

# Fig. 8

full-pel sample

sub-pel sample interpolated with fixed filter

sub-pel sample interpolated with adaptive filter

810

820

830

EP 2 296 380 A1

# Fig. 9

AIF_mode_flag_1

AIF mode 1

AIF_mode_flag_2

AIF mode 2

AIF mode 3

EP 2 296 380 A1

# Fig. 10

```
    ( encode video signal )
              │
              ▼
S1010    < next frame? >───no──┐
              │                │
             yes               │
              ▼                │
S1020  ┃ select filter mode ┃  │
              │                │
              ▼                │
S1030  │ determine filter parameters │
              │                │
              ▼                │
S1040  │ encode filter mode    │
       │ (and filter parameters) │
              │                │
              ▼                │
S1050  │ update bitstream │    │
              │                │
              ▼◄───────────────┘
          ( end )
```

# Fig. 11

```
    ( decode video signal )
              │
              ▼
S1110    < next frame? >───no──┐
              │                │
             yes               │
              ▼                │
S1120  │ extract the filter mode │
              │                │
              ▼                │
S1130  │ decode the filter mode │
              │                │
              ▼                │
S1140  │ extract filter parameters │
              │                │
              ▼                │
S1150  │ set up the filter │   │
              │                │
              ▼                │
S1160  │ filter frame │        │
              │                │
              ▼◄───────────────┘
          ( end )
```

EP 2 296 380 A1

## Fig. 12

```
                    ( select filter mode )
                              │
                              ▼
                           ┌──── S1210
        yes  ◄───────  next block ?  ───────►  no
         │                                      │
         ▼                                      ▼
┌──────────────────┐  S1220        ┌──────────────────┐  S1240
│ calculate distortion │           │   determine rate    │
│  for each filter mode │          │  for each filter mode │
└──────────────────┘               └──────────────────┘
         │                                      │
         ▼                                      ▼
┌──────────────────┐  S1230        ┌──────────────────┐  S1250
│ update the frame sum │           │  find optimum frame │
│   of distortions      │          │    filter mode      │
└──────────────────┘               └──────────────────┘
                                              │
                                              ▼
                                          ( end )
```

## Fig. 13

```
                    1301              1302              1303
Input Signal  ──►  ┌────────┐  ──►  ┌────────┐  ──►  ┌────────┐  ──►
                   │ Encoder │       │ Channel │       │ Decoder │
                   └────────┘       └────────┘       └────────┘

                    Encoder site            Decoder site
```

GRÜNECKER, KINKELDEY,
STOCKMAIR & SCHWANHÄUSSER

EP 2 296 380 A1

# Fig. 14

Fig. 15

Camera ex116

Computer ex111

LSI ex117

PDA ex112

Camera ex113

Cell phone ex115

ex107

ex108

ex109

Cell phone ex114

ex110

ex100

Telephone network ex104

Streaming server ex103

Internet ex101

Internet service provider ex102

ex 201

ex 208

ex 202

ex 203

ex 204

ex 206

ex 207

S
D

ex 205

ex 115

# Fig. 16

## Fig. 17

ex115

ex203 camera portion → ex303 camera interface portion

ex305 sound processing portion

ex204 operating keys → ex304 operational input controller portion

ex312 image coding portion

ex306 modem circuit portion

ex307 recording and reproduction portion

ex308 multiplex separation portion

ex311 main controller portion

ex313

ex310 power source circuit portion → to each portion

ex309 image decoding portion

ex302 LCD controller portion

ex202 display portion

ex208 sound output portion

ex205 sound input portion

ex301 transmission and reception circuit portion

ex207 recording medium

ex201

31

# Fig. 18

ex402

Monitor ex404

Reproducing
apparatus ex403

Satellite ex410

Antenna ex411

Car ex412

Antenna ex406

Car navigation ex413

Cable ex405

Broadcast station ex409

ex421

ex422

SD

Monitor ex408

STB ex407

TV ex401

Recorder ex420

EP 2 296 380 A1

**EUROPEAN SEARCH REPORT**

Application Number

EP 09 01 1331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 048 886 A1 (PANASONIC CORP [JP]) 15 April 2009 (2009-04-15) * paragraphs [0027], [0040] - [0041], [0051] - [0054], [0059] - [0061], [0063] * <br> * paragraphs [0067] - [0072], [0077] - [0081], [0084], [0107], [0108] * <br> * figures 3,4 * | 1-15 | INV. H04N7/26 H04N7/36 H04N7/50 |
| X | WO 2008/084378 A2 (NOKIA CORP [FI]; NOKIA INC [US]; RUESANOVSKYY DMYTRO [FI]; UGUR KEMAL) 17 July 2008 (2008-07-17) * page 2, line 25 - page 3, line 6 * <br> * page 9, line 8 - line 12 * <br> * page 14, line 4 - page 16, line 20 * <br> * page 20, line 11 - line 27 * <br> * page 21, line 9 - line 14 * <br> * page 23, line 12 - line 13 * <br> * page 24, line 26 - page 25, line 21 * <br> * page 26, line 14 - line 19 * <br> * page 27, line 18 - line 23 * <br> * tables 3-6 * <br> * figure 7 * | 1-15 | |
| A | Y-J CHIU ET AL: "Adaptive (Wiener) filter for video compression" 35. VCEG MEETING; 85. MPEG MEETING; 16-7-2008 - 18-7-2008; BERLIN; (VIDEO CODING EXPERTS GROUP OF ITU-T SG.16),, 12 July 2008 (2008-07-12), XP030003579 * the whole document * | 1-15 | |

TECHNICAL FIELDS SEARCHED (IPC)

H04N

-/--

The present search report has been drawn up for all claims

| Place of search | Date of completion of the search | Examiner |
|---|---|---|
| The Hague | 7 June 2010 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 09 01 1331

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YURI VATIS ET AL: "Syntax of adaptive filter coefficients in the KTA reference model" ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), no. VCEG-AF09, 2 May 2007 (2007-05-02), XP030003530 * the whole document * | 1-15 | |
| A | WEDI T: "Adaptive Interpolation Filter for H.26L. Document VCEG-N28 Filename VCEG-N28.doc generated 16.09.2001" ITU STUDY GROUP 16 - VIDEO CODING EXPERTS GROUP, XX, XX, 24 September 2001 (2001-09-24), pages 1-7, XP002398691 * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 7 June 2010 | Mayer, Claudia |

EPO FORM 1503 03.82 (P04C01)

**EP 2 296 380 A1**

**ANNEX TO THE EUROPEAN SEARCH REPORT
ON EUROPEAN PATENT APPLICATION NO.**

EP 09 01 1331

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2010

| Patent document cited in search report | | Publication date | Patent family member(s) | | Publication date |
|---|---|---|---|---|---|
| EP 2048886 | A1 | 15-04-2009 | AU | 2008310494 A1 | 16-04-2009 |
| | | | EP | 2187649 A1 | 19-05-2010 |
| | | | WO | 2009047917 A1 | 16-04-2009 |
| WO 2008084378 | A2 | 17-07-2008 | EP | 2127391 A2 | 02-12-2009 |
| | | | US | 2008247467 A1 | 09-10-2008 |

EPO FORM P0459

For more details about this annex : see Official Journal of the European Patent Office, No. 12/82

35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2048886 A

- EP 1983759 A

**Non-patent literature cited in the description**

- Adaptive Filter Theory. **S. Haykin.** Prentice Hall Information and System Sciences Series. Prentice Hall, 2002

- **G.J.Sullivan ; T. Wiegand.** Rate-Distortion Optimization for Video Compression. *IEEE Magazine on Signal Processing,* November 1998